(19)

Europäisches
Patentamt
European
Patent Office
Office européen
des brevets

(11) **EP 2 230 012 A1**

(12) **EUROPEAN PATENT APPLICATION**

(43) Date of publication:
**22.09.2010 Bulletin 2010/38**

(51) Int Cl.:
*B01J 23/46* (2006.01)   *B01J 31/08* (2006.01)
*B01J 35/02* (2006.01)   *B01J 37/08* (2006.01)
*B01J 37/16* (2006.01)   *C01B 3/02* (2006.01)
*B01J 35/04* (2006.01)   *C01B 3/06* (2006.01)

(21) Application number: **10155997.9**

(22) Date of filing: **09.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **13.03.2009 TW 098108329**

(71) Applicant: **Industrial Technology Research
Institute
Chutung Hsinchu 31040 (TW)**

(72) Inventors:
• **Hsueh, Chan-Li
852, Kaohsiung County (TW)**

• **Ku, Jie-Ren
807, Kaohsiung City (TW)**
• **Tsai, Shing-Fen
744, Tainan County (TW)**
• **Hsu, Ya-Yi
711, Tainan County (TW)**
• **Liu, Cheng-Hong
600, Chiayi City (TW)**
• **Jeng, Ming-Shan
221, Taipei County (TW)**
• **Tsau, Fang-Hei
833, Kaohsiung County (TW)**

(74) Representative: **Lang, Christian
IP Law Firm LangRaible
Herzog-Wilhelm-Straße 22
80331 München (DE)**

(54) **Catalyst for catalyzing hydrogen releasing reaction and manufacturing method thereof**

(57)    A method of manufacturing a catalyst for catalyzing hydrogen releasing reaction includes following steps. First, a solution with metal catalyst ions is provided. Next, several catalyst supports are provided. Each catalyst support includes several chelating units. Then, the catalyst supports are mixed with the solution, so that the metal catalyst ions in the solution chelate with the chelating units on the surface of each catalyst support. Subsequently, the metal catalyst ions chelating with the surface of the catalyst supports are reduced, so that metal catalyst nano-structures and/or metal catalyst atoms are coated on the surface of the catalyst supports, for forming catalysts.

FIG. 2

EP 2 230 012 A1

**Description**

This application claims the benefit of Taiwan application Serial No. 98108329, filed March 13, 2009, the subject matter of which is incorporated herein by reference.

BACKGROUND OF THE INVENTION

Field of the Invention

The invention relates in general to a catalyst and a manufacturing method thereof, and more particularly to a catalyst for catalyzing a hydrogen releasing reaction and a manufacturing method thereof.

Description of the Related Art

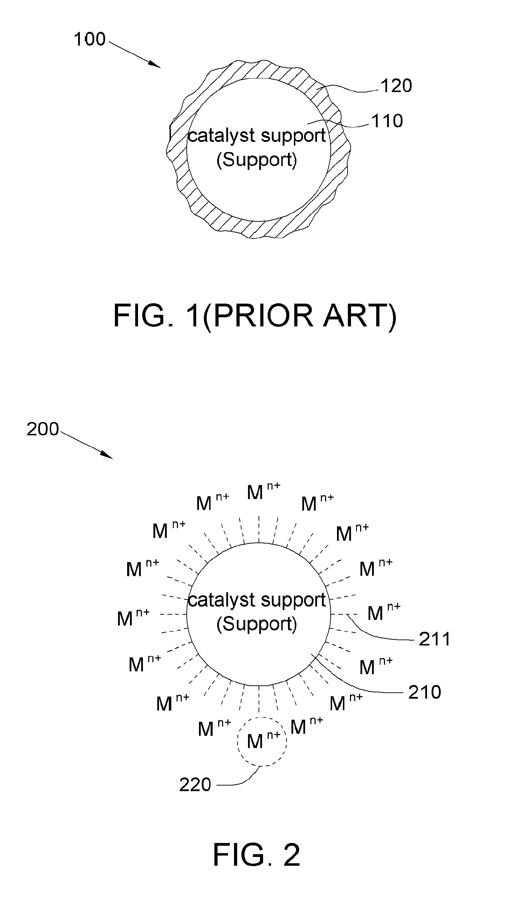

In recent years, fuel cell has become the main trend in the development of green energy while resources are getting more and more limited. A hydrogen fuel cell uses hydrogen as fuel and oxygen as oxidant. Hydrogen is dangerous and flammable gas with strict storage conditions. Therefore, hydride solution or hydrogen storage material containing hydrogen is usually used as hydrogen source instead. Hydrogen is extracted from the hydrogen source for the fuel cell.
However, the fuel cell nowadays still cannot be applied to daily life widely. One of the reasons is that the hydrogen-releasing rate to extract hydrogen from the hydrogen source is too low, which results in insufficient hydrogen. In such conditions, the device has to be large in order to produce the required amount of hydrogen. Another reason is that only nano-scale catalyst has sufficient surface area to meet the requirement of hydrogen-releasing rate when catalyst is in use for increasing the hydrogen-releasing rate of the hydrogen source. However, conventional nano-scale hydrogen releasing catalyst cannot be manufactured rapidly using mass production technologies. The cost of material and equipment is high. As a result, it is difficult to commercialize the nano-scale hydrogen releasing catalyst. For example, conventional hydrogen releasing catalyst includes precious metal, ruthenium and rhodium, and non-precious metal, cobalt, nickel, iron, manganese and copper. Precious metal, ruthenium and rhodium, can provide much higher hydrogen-releasing rate than non-precious metal.
Please refer to FIG. 1. FIG. 1 illustrates a conventional catalyst of hydrogen releasing reaction. The conventional catalyst 100 of hydrogen releasing reaction includes a catalyst support 110 and a metal catalyst layer 120. The conventional catalyst support 100 is for example aluminum oxide. The metal catalyst layer 120 is for example ruthenium, cobalt, nickel, iron, manganese or copper. The conventional method of manufacturing catalyst 100 of hydrogen releasing reaction includes following steps. Mixture including metal catalyst is usually coated on the surface of the catalyst support 110. Then, a metal catalyst layer 120 is formed on the surface of the catalyst support 110 at a high temperature about 550$^{\circ}$C. After the 550$^{\circ}$C high temperature process, metal oxide is formed on the surface of the catalyst support 110. The metal oxide needs to be reduced to metal. The reduction has to be performed at a higher temperature, such as about 700 $^{\circ}$C, by using hydrogen. The conventional manufacturing method uses not only high temperature system but also vacuum system or protective atmosphere, which costs a lot. Moreover, it is extremely dangerous to use hydrogen for reducing metal at a high temperature.

SUMMARY OF THE INVENTION

The invention is directed to a catalyst for catalyzing hydrogen releasing reaction and a method thereof. Metal catalyst ions, metal catalyst atoms, metal catalyst nano-structures or the combination of metal catalyst atoms and nano-structures are formed on the surface of the catalyst supports through chelation and reduction. The catalyst of the embodiments of the present invention increases the hydrogen-releasing rate, and the manufacturing method thereof only includes simple steps. Mass production is achieved rapidly and cheaply so that the product can be commercialized,
**[0007]** According to the first aspect of the present invention, a method of manufacturing a catalyst is provided. The catalyst is used for catalyzing hydrogen releasing reaction. The manufacturing method includes following steps. First, a solution with metal catalyst ions is provided. Next, catalyst supports including plenty of chelating units are provided. Then, the catalyst supports are mixed with the solution, so that the metal catalyst ions chelate with the chelating units on the surface of the catalyst supports. Subsequently, the metal catalyst ions chelating with the surface of the catalyst supports are reduced, so that metal catalyst nano-structures and/or metal catalyst atoms are coated on the surface of the catalyst supports, for forming catalysts.
According to the second aspect of the present invention, a catalyst for catalyzing hydrogen releasing reaction is provided. The catalyst includes a catalyst support of ion exchange resin and metal catalyst atoms formed on the surface of the catalyst support.
According to the second aspect of the present invention, another catalyst for catalyzing hydrogen releasing reaction is provided. The catalyst includes a catalyst support of ion exchange resin and metal catalyst ions. Also, the surface of the catalyst support has several chelating groups. The metal catalyst ions respectively chelate with the chelating groups on the surface of the catalyst support.

The invention will become apparent from the following detailed description of the preferred but non-limiting embodiments. The following description is made with reference to the accompanying drawings.

BRIEF DESCRIPTION OF THE DRAWINGS

FIG. 1 illustrates a conventional catalyst of hydrogen releasing reaction;

FIG. 2 illustrates the catalyst for catalyzing a hydrogen releasing reaction according to the first embodiment of the present invention;

FIG. 3 shows a flow chart of the manufacturing method of the catalyst according to the first embodiment of the present invention;

FIG. 4 illustrates the manufacture of the catalyst according to the first embodiment of the present invention;

FIG. 5 illustrates the catalyst for catalyzing hydrogen releasing reaction according to the second embodiment of the present invention;

FIG. 6 is a flow chart of the manufacturing method of the catalyst according to the second embodiment of the present invention;

FIG. 7 illustrates the manufacture of the catalyst according to the second embodiment of the present invention;

FIG. 8 shows a flow chart of a method of reducing metal catalyst ions. The method of reducing metal catalyst ions 320 includes following steps; and

FIG. 9 shows the hydrogen releasing curve using the catalyst $Al_2O_3$ and the catalyst Ru/IR-120.

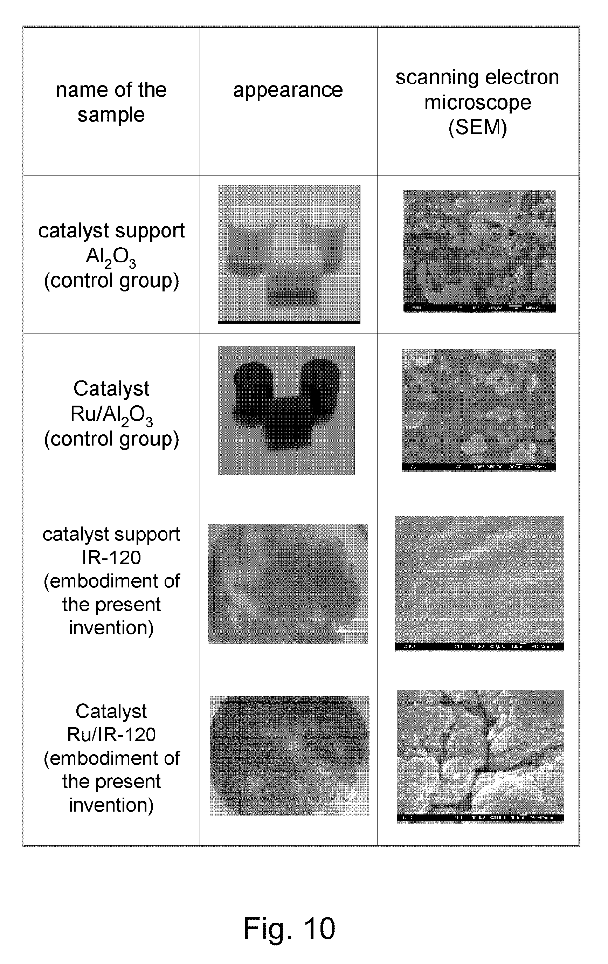

Fig. 10 shows experimental results for several samples.

DETAILED DESCRIPTION OF THE INVENTION

A rapid-manufactured catalyst for catalyzing hydrogen releasing reaction and a manufacturing method thereof are provided by the present invention. The manufacturing process is simple, which allows mass production rapidly and cheaply. The catalyst has high hydrogen-releasing rate. The first and second embodiments of the present invention are described as follows. However, the structure of the catalyst and the reaction steps are used as examples and not to limit the scope of the present invention. Moreover, unnecessary elements are not shown in the drawings for clarity

First Embodiment

Please refer to FIG. 2. FIG. 2 illustrates the catalyst for catalyzing hydrogen releasing reaction according to the first embodiment of the present invention. In the first embodiment, the catalyst 200 for catalyzing hydrogen releasing reaction includes an ion exchange resin type catalyst support 210 and several metal catalyst ions 220. Several chelating groups 211 are on the surface of the catalyst support 210. The metal catalyst ions 220 respectively chelate with the chelating groups 211 on the surface of the catalyst support 210.

The particle size of the catalyst support 210 is between 1 $\mu$m and 10000 $\mu$m. The catalyst support 210 is preferably cation exchange resin, such as MSC-1 B, DowEX-HCR-W2, MSC-1 A, Amberlyst-15, DowEX-22, DowEX-88 and IR-120. Or, the catalyst support 210 can be anion exchange resin, such as A-26, IRA-400, IRA-900, DowEX-550A, DowEX-MSA-1, DowEX-MSA-2 and A-36. Furthermore, the metal catalyst ions 220 include at least one selected from the group consisting of ruthenium, cobalt, nickel, iron, manganese or copper.

The catalyst 200 for catalyzing hydrogen releasing reaction of the present embodiment is for catalyzing the hydrolysis reaction of hydride and water for producing hydrogen. The hydride is selected from the group consisting of lithium aluminum hydride, sodium aluminum hydride, magnesium aluminum hydride, calcium aluminum hydride, lithium borohydride, sodium borohydride, potassium borohydride, beryllium borohydride, magnesium borohydride, calcium borohydride, lithium hydride, sodium hydride, magnesium hydride and calcium hydride. Before the catalyst powder 200 is used in the hydrolysis reaction of the hydride, the catalyst powder 200 can be ground into particles with particle size around 1 $\mu$m to 10 mm, for increasing the total surface area. When the catalyst powder 200 catalyzes the hydrolysis reaction of hydride and water, hydrogen is produced more rapidly.

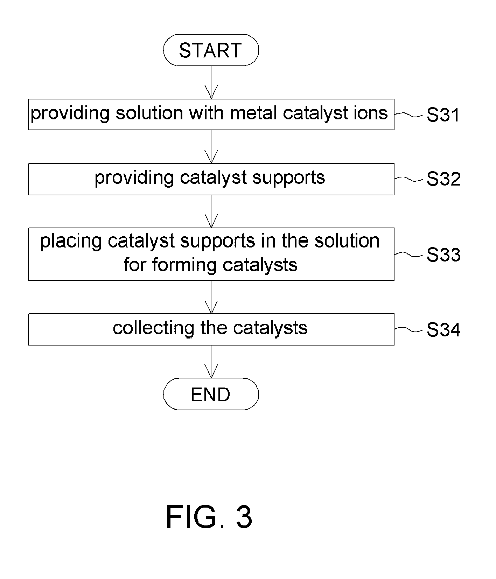

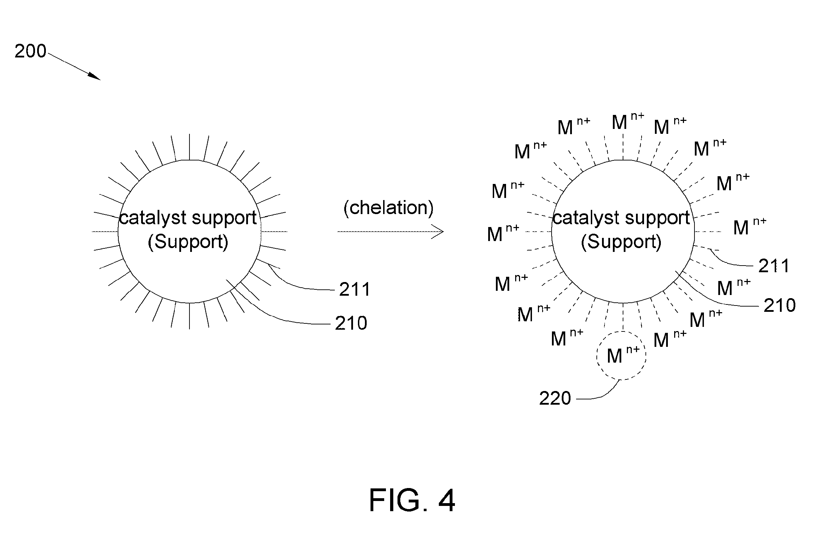

The manufacturing method of the catalyst 200 is described with reference to the accompanying drawings as follows. Please refer to FIG. 3 and FIG. 4. FIG. 3 shows a flow chart of the manufacturing method of the catalyst according to the first embodiment of the present invention. FIG. 4 illustrates the manufacture of the catalyst according to the first embodiment of the present invention. In the first embodiment, the manufacturing method of the catalyst 200 includes following steps.

First, as shown in the step S31, a solution with metal catalyst ions 220 is provided. The solution is metal salt solution. The molar concentration of the metal catalyst ions 220 in the solution is approximately between 0.001 M and 10 M depending on the practical conditions.

Next, as shown in the step S32, several catalyst supports 210 are provided. Each catalyst support 210 includes several chelating units 211. Moreover, in the step S32, the catalyst support 210 can be broken into evenly sized particles with particle size between 1 $\mu$m and 10000 $\mu$m by grinding or any other method.

Then, as shown in the step S33, the catalyst supports 210 are added into the solution to form several catalysts 200. In the step S33, the metal catalyst ions 220 in the solution chelate with the chelating units 210 on the surface of each catalyst support 210, for forming the catalysts 200.

Later, as shown in the step S34, the catalysts 200 are collected. The step S34 includes steps of extracting, cleaning and drying the catalysts 200. In the step of drying the catalysts 200, the catalysts 200 are dried in a vacuum environment or inert gas.

Furthermore, in the present embodiment, the operating temperature to manufacture the catalysts 200 is between -20 $\underline{o}$C and 80 $\underline{o}$C. Therefore, the catalysts 200 can be manufactured at room temperature without using the high temperature system in the present invention. Moreover, the present embodiment uses iron exchange resin as the catalyst supports in the chelate reaction to capture metal catalyst ions on the surface. The amount of the chelated metal catalyst ions can be controlled by varying concentration and time. Therefore, the manufacturing process provided by the first embodiment of the present invention is very simple, which allows rapid mass production and low equipment cost.

Second Embodiment

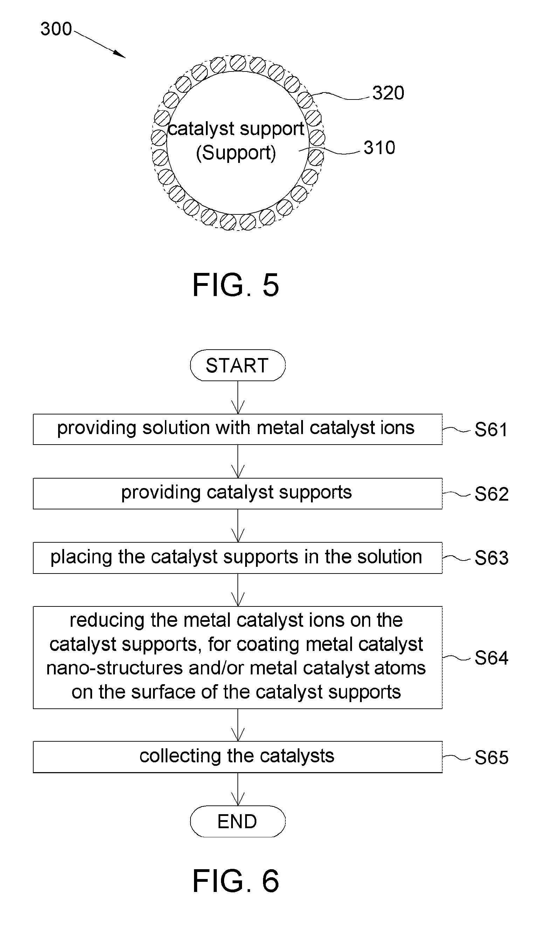

Please refer to FIG. 5. FIG. 5 illustrates the catalyst for catalyzing hydrogen releasing reaction according to the second embodiment of the present invention. In the second embodiment, the catalyst 300 for catalyzing hydrogen releasing reaction includes an ion exchange resin type catalyst support 310 and several metal catalyst atoms. The metal catalyst atoms are formed on the surface of the catalyst support 310. Also, the metal catalyst atoms form several metal catalyst nano-structures 320 on the surface of the catalyst support 310. Or, only some of the metal catalyst atoms form several metal catalyst nano-structures 320 on the surface of the catalyst support. In the embodiment, the dimension of the metal catalyst nano-structure is less than 100 nm.

The particle size of the catalyst support 310 is between 1 $\mu$m and 10000 $\mu$m. Similarly, the catalyst support 310 can be cation exchange resin, such as MSC-1B, DowEX-HCR-W2, MSC-1 A, Amberlyst-15, DowEX-22, DowEX-88 and IR-120. Or, the catalyst support 310 can be anion exchange resin, such as A-26, IRA-400, IRA-900, DowEX-550A, DowEX-MSA-1, DowEX-MSA-2 and A-36. The metal catalyst atom includes at least one selected from the group consisting of ruthenium, cobalt, nickel, iron, manganese or copper.

Similarly, the catalyst 300 for catalyzing hydrogen releasing reaction of the present embodiment catalyzes the hydrolysis reaction of hydride and water for producing hydrogen. The hydride is selected from the group consisting of lithium aluminum hydride, sodium aluminum hydride, magnesium aluminum hydride, calcium aluminum hydride, lithium borohydride, sodium borohydride, potassium borohydride, beryllium borohydride, magnesium borohydride, calcium borohydride, lithium hydride, sodium hydride, magnesium hydride and calcium hydride. Similar to the first embodiment, before used in the hydrolysis reaction of the hydride, the catalyst powder 200 can be broken into particles with particle size about 1 $\mu$m and 10000 $\mu$m, for increasing the total surface area. Therefore, when the catalyst catalyzes the hydrolysis reaction of the hydride and water, hydrogen is produced more rapidly.

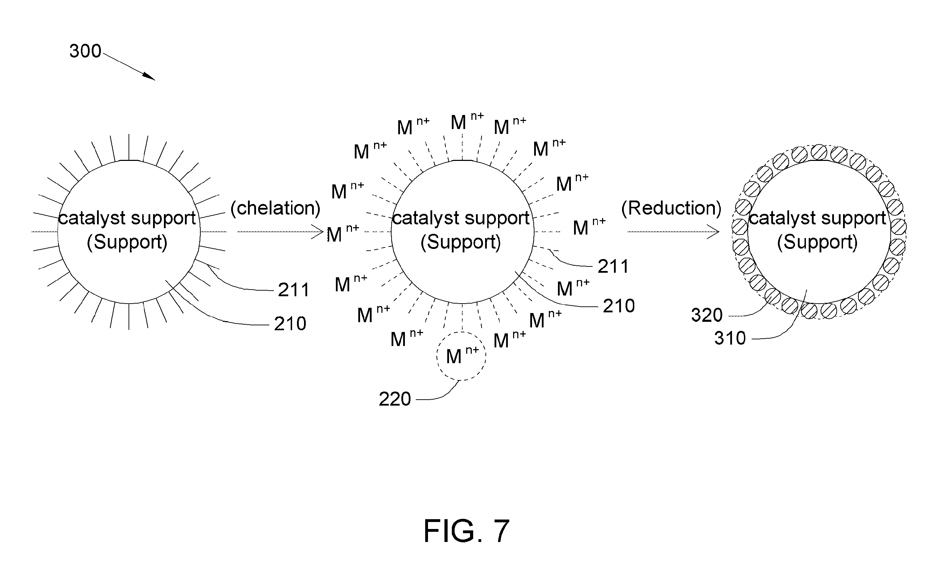

The manufacturing method of the catalyst 300 of the present embodiment is described as follows with reference to the flow chart. Please refer to FIG. 6 and FIG. 7. FIG. 6 is a flow chart of the manufacturing method of the catalyst according to the second embodiment of the present invention. FIG. 7 illustrates the manufacture of the catalyst according to the second embodiment of the present invention. In the second embodiment, the manufacturing method of the catalyst 300 includes following steps.

First, as shown in the step S61, a solution with metal catalyst ions 320' is provided. The solution is metal salt solution. The molar concentration of the metal catalyst ions 320' is approximately between 0.001 M and 10 M depending on the practical conditions.

Next, as shown in the step S62, several catalyst supports 310 are provided. Each catalyst support 310 includes several chelating units 311. Similarly, in the step S62, the catalyst supports 310 can be broken into evenly-sized particles with particle size between 1 $\mu$m and 10 mm.

Then, as shown in the step S63, the catalyst supports 310 are added into the solution. In the step S63, the metal catalyst ions 320' in the solution chelate with the chelating units 311 on the surface of each catalyst support 310.

Later, as shown in the step S64, the metal catalyst ions 320' on the catalyst supports 310 are reduced. As a result, several metal catalyst nano-structures 320 and/or metal catalyst atoms are coated on the surface of the catalyst supports 310 to form the catalysts 300.

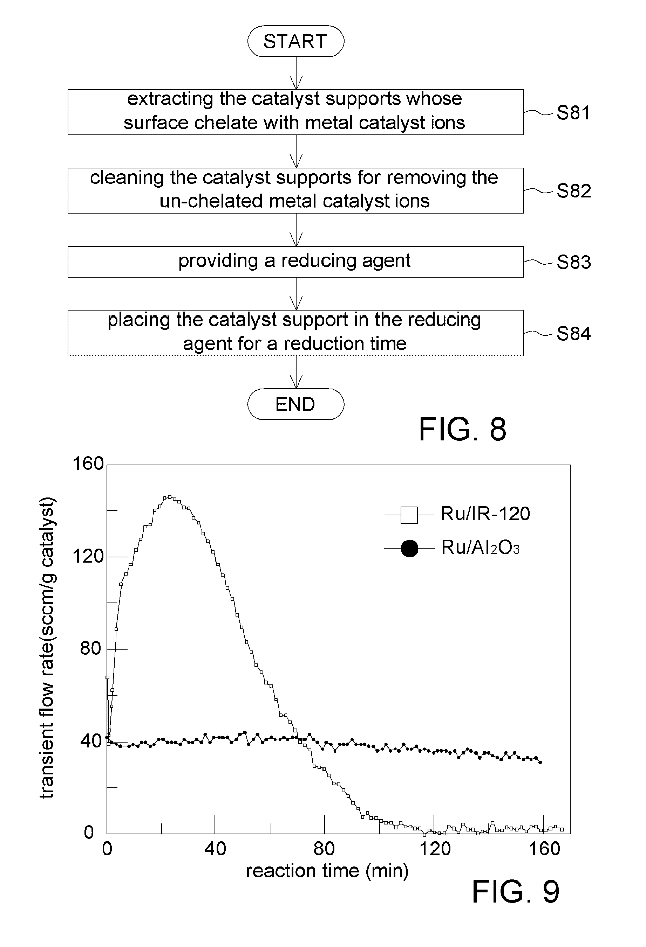

Also, a method of reducing the metal catalyst ions 320' in the step S64 is provided as an example by the present embodiment for anyone who has ordinary skill in the field of the present invention. For example, in the step S64, a reducing agent can be used for reducing the metal catalyst ions 320' to be metal catalyst atoms. All of the metal catalyst atoms may form metal catalyst nano-structures 320. Or, only some of the metal catalyst atoms form metal catalyst nano-structures 320, depending on the practical conditions. Please refer to FIG. 8. FIG. 8 shows a flow chart of a method of reducing metal catalyst ions. The method of reducing metal catalyst ions 320 includes following steps. First, as shown in the step S81, the catalyst supports 310 whose surface chelates with the metal catalyst ions 320' are extracted. Next, as shown in the step S82, the catalyst supports 310 are cleaned for removing the un-chelated metal catalyst ions 320'. Thereon, as shown in the step S83, a reducing agent is provided. The reducing agent is for example a solution of sodium borohydride, potassium borohydride, dimethylaminoborane, hydrazine, formaldehyde, formic acid or sulfite. The molar concentration of the reducing agent is approximately between 0.0001 M and 10 M depending on the practical conditions. Later, as shown in the step S84, the catalyst supports 310 are placed in the reducing agent for a reducing time. In the step S84, the metal catalyst ions 320' on the surface of the catalyst supports 310 are reduced to form metal catalyst nano-structures 320 and/or metal catalyst atoms. The reducing time is about 5 seconds to 48 hours depending on the molar concentration and the amount of the reducing agent.

Subsequently, as shown in the step S65, the catalysts 300 are collected. The method of collecting catalysts 300 of the present embodiment is similar to that of the first embodiment. The step S65 includes steps of extracting, cleaning and drying the catalysts 300. In the step of drying the catalysts 300, the catalysts 300 are dried in a vacuum environment or inert gas.

Furthermore, in the present embodiment, the operating temperature to manufacture the catalysts 300 is between -20 ºC and 80 ºC. Therefore, through chelation and reduction, the present embodiment uses ion exchange resin to capture metal catalyst ions and then reduces the metal catalyst ions to metal catalyst nano-structures and/or metal catalyst atoms without using high temperature system. When metal catalyst ions are reduced, some of the metal catalyst ions may be reduced to metal catalyst atoms, and others are reduced to metal catalyst nano-structures, depending on the practical conditions. The present invention is not limited thereto. Compared to the conventional method of manufacturing catalyst, the method of manufacturing nano-scale metal catalyst of the present embodiment is easier, which allows mass production rapidly and cheaply. Also, the chelation and reduction can be controlled by varying the concentration and time to improve the production.

One of the related experiments is provided as follows as reference for people having ordinary skill in the art. However, anyone who has ordinary skill in the field of the present invention can understand that the components and steps used in the experiment are only for illustration but not to limit the scope of the present invention. When applied practically, the parameters of the experiment can be adjusted according to the practical conditions.

# Related experiment – catalyst Ru/IR-120 and catalyst Ru/Al$_2$O$_3$

In the related experiment, the catalyst Ru/IR-120 is manufactured by the method of the second embodiment. The catalyst Ru/Al$_2$O$_3$ is manufactured by the conventional method as a control group.

When the catalyst Ru/IR-120 of the present embodiment is manufactured, strong acid type (cation-type) ion exchange resin IR-120 is used as catalyst supports. Precious metal ruthenium is used as metal catalyst. First, ruthenium ions chelate with the surface of the ion exchange resin IR-120. Then, ruthenium ions on the surface of the resin IR-120 are reduced to ruthenium atoms by sodium borohydride, a strong reducing agent, through chemical reduction. As a result, ruthenium catalyst with nano-scale structure is formed on the surface of the resin IR-120.

The detailed steps of producing the catalyst Ru/IR-120 are described as follows:

(a) 5 g ruthenium chloride is completely dissolved in 100 ml de-ionized water to produce ruthenium chloride solution. The molar concentration of the ruthenium ions is approximately 0.24 M.

(b) 20 g IR-120 is added into the ruthenium chloride solution. The solution is stirred at 150 rpm.

(c) After about 4 hours, IR-120 turns dark black gradually, which means a certain amount of ruthenium ions chelate with the chelating groups on the surface of IR-120. Dark black IR-120 is extracted and washed by a large amount of de-ionized water for removing un-chelated ruthenium ions.

(d) The weight of the ruthenium ions chelating with the surface of the IR-120 is calculated by a scale. Sodium borohydride solution is produced with molar ratio of ruthenium to sodium borohydride being 1:2 to be used as reducing agent. Within a particular period of time, the weight of the ruthenium ions chelating with the surface of IR-120 increases as the waiting time of the step (c) increases. Therefore, the weight of ruthenium ions chelating with the surface of IR-120 can be controlled by varying the waiting time of the step (c).

(e) IR-120 chelating with ruthenium ions is added into sodium borohydride solution and stirred at 150 rpm.

(f) After about 3 hours, IR-120 turns bright silver from dark black gradually, which means a certain amount of ruthenium ions are reduced to ruthenium atoms on the surface of IR-120. Bright silver IR-120 is extracted and washed by a large amount of de-ionized water.

(g) IR-120 is placed in a vacuum oven to perform vacuum drying at a temperature of 25 to 80 $^{\circ}$C.

(h) After IR-120 is dried, the production of the catalyst Ru/IR-120 is completed.

Moreover, the catalyst Ru/Ru/Al$_2$O$_3$ is produced by the conventional manufacturing method as a control group. The conventional manufacturing method includes following steps. First, conventional catalyst supports, $\gamma$-Al$_2$O$_3$, are in use and ruthenium chloride solution is produced through impregnation. The manufacturing process includes calcinations of supports, impregnation, filtration and drying, high temperature sintering and reduction through hydrogen.

After the catalyst is produced, property analysis of the catalyst and test of the catalyst in catalyzing hydrogen releasing reaction are performed. Attached diagram 1 shows the pictures of the appearance and the enlarged pictures shot by a scanning electron microscope (SEM) of the catalyst supports, $\gamma$-Al$_2$O$_3$, of the control group and the produced catalyst Ru/Al$_2$O$_3$, and the catalyst supports IR-120 of the embodiment and the produced catalyst Ru/IR-120. The property analysis is shown in the diagram 1. The original color of the catalyst support IR-120 of the embodiment is cream yellow. After reduced by the reducing agent, the surface of the resin chelating with ruthenium ions turns silver white. The photo shot by SEM shows granular ruthenium with nano-structures is formed on the surface of IR-120 after reduction. The average particle size of the reduced ruthenium nano-particles is around 60 nm to 80 nm.

Furthermore, in the test of the catalyst catalyzing the hydrogen releasing reaction, the catalyst Ru/Al$_2$O$_3$ of the control group and the catalyst Ru/IR-120 of the embodiment catalyze the hydrolysis reaction of sodium borohydride and water, for producing hydrogen. FIG. 9 shows the hydrogen releasing curve using the catalyst Al$_2$O$_3$ and the catalyst Ru/IR-120. The result shows that under the same conditions (1wt.% NaOH + 5wt.% NaBH$_4$), the hydrogen-releasing rate of the catalyst Ru/IR-120 of the embodiment is significantly greater than that of the conventional catalyst Al$_2$O$_3$. The maximum transient flow rate can reach approximately 150 sccm/g, and hydrogen is released completely in 120 minutes. The transient flow rate of the conventional catalyst, Ru/Al$_2$O$_3$, is about 40 sccm/g, which is relatively low. Hydrogen is released at a low rate even after 120 minutes, which means hydrogen can not be released efficiently.

According to the above results, in the manufacturing method of the catalyst Ru/Al$_2$O$_3$, ruthenium chloride solution is produced through impregnation by using $\gamma$-Al$_2$O$_3$ as support. The manufacturing method includes calcinations of support, impregnation, filtration and drying, high temperature sintering and reduction through hydrogen. The catalyst Ru/IR-120 of the present embodiment is manufactured by only two steps, chelation and reduction. First, metal ions chelate with the surface of the cation exchange resin. Then, the metal ions are reduced to coating-type catalyst with nano-structures on the surface by the reducing agent. The method avoids the conventional method of performing reduction at a high temperature with plenty of steps. Furthermore, the hydrogen-releasing rate of the catalyst Ru/IR-120 is significantly higher than that of the conventional catalyst Ru/Al$_2$O$_3$.

In the catalyst for catalyzing hydrogen releasing reaction and the manufacturing method thereof provided by the present invention, plenty of metal catalyst ions or nano-scale metal catalysts are formed on the surface of the catalyst supports through chelation and reduction. The advantages include high hydrogen-releasing rate and simplified steps. For example, the catalysts are produced by only two steps, chelating metal ions with the surface of the resin by using cation exchange resin and reducing the metal ions to coating-type catalysts with nano-structures on the surface at room temperature by a reducing agent. Therefore, mass production is achieved rapidly and cheaply without using the conventional high temperature system. As a result, product can be commercialized. Metal catalyst ions are captured on the surface through the chelation of ion exchange resin. Also, the production can be controlled by varying the concentration and time. As to nano-scale metal catalysts, chelation and reduction can be controlled by varying the concentration and time as well for improving the production.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

1. A method of manufacturing a catalyst used for catalyzing hydrogen releasing reaction, the method comprising:

   providing a solution comprising a plurality of metal catalyst ions;
   providing a plurality of catalyst supports, each catalyst support comprising a plurality of chelating units;
   mixing the catalyst supports and the solution, so that the metal catalysts in the solution chelate with the chelating units on the surface of the catalyst supports; and
   reducing the metal catalyst ions on the surface of the catalyst supports, for coating a plurality of metal catalyst nano-structures and/or metal catalyst atoms on the surface of the catalyst support, so as to form a plurality of catalysts.

2. The method according to claim 1, wherein the catalyst supports and the solution are mixed at an operating temperature between -20 ºC and 80 ºC, for performing chelation and/or the metal catalyst ions chelated on the surface of the catalyst supports are reduced at room temperature.

3. The method according to claim 1 further comprising following steps before performing the step of reduction:

   extracting catalyst supports whose surface chelates with the metal catalyst ions; and
   cleaning the catalyst supports whose surface chelates with metal catalyst ions, for removing the un-chelated metal catalyst ions.

4. The method according to claim 3 further comprising following steps after performing the step of removing the un-chelated metal catalyst ions:

   providing a reducing agent; and
   adding the catalyst supports whose surface chelates with the metal catalyst ions into the reducing agent, the metal catalyst ions chelating with the surface of the catalyst supports are reduced to form the metal catalyst nano-structures and/or metal catalyst atoms.

5. The method according to claim 4, wherein the reducing agent comprises a solution of sodium borohydride, potassium borohydride, dimethylaminoborane, hydrazine, formaldehyde, formic acid or sulfite.

6. The method according to claim 4, wherein the molar concentration of the reducing agent is between 0.001 M and 10 M and/or the metal catalyst ions on the surface of the catalyst supports are reduced to the metal catalyst nano-structures and/or metal catalyst atoms for 5 seconds to 48 hours in the step of reduction.

7. The method according to claim 1 further comprising:

   collecting the catalysts after the step of reduction.

8. The method according to claim 7, wherein the step of collecting the catalysts further comprises:

   extracting the catalysts;
   cleaning the catalysts; and
   drying the catalysts.

9. The method according to claim 8, wherein the catalysts are dried in a vacuum environment or an inert gas in the step of drying the catalysts.

10. The method according to claim 1, wherein the metal catalyst ions include at least one selected from the group consisting of ruthenium, cobalt, nickel, iron, manganese or copper, and/or the solution is metal salt solution, and the molar concentration of the metal catalyst ions in the solution is between 0.001 M and 10 M.

11. The method according to claim 1, wherein the average particle size of the catalyst supports is between 1 $\mu$m and 10000 $\mu$m.

12. A catalyst for catalyzing hydrogen releasing reaction, the catalyst comprising:

an ion exchange resin type catalyst support; and

a plurality of metal catalyst atoms formed on the surface of the catalyst support.

13. The catalyst according to claim 12, wherein at least some of the metal catalyst atoms form a plurality of metal catalyst nano-structures on the surface of the catalyst support.

14. The catalyst according to claim 13, wherein a dimension of the metal catalyst nano-structures is less than 100 nm.

15. The catalyst according to claim 12, wherein the metal catalyst atom includes at least one selected from the group consisting of ruthenium, cobalt, nickel, iron, manganese or copper, and/or particle size of the catalyst support is between 1 $\mu$m and 10 mm.

16. A catalyst for catalyzing hydrogen releasing reaction, the catalyst comprising:

an ion exchange resin type catalyst support, having a plurality of chelating groups on the surface of the catalyst support; and

a plurality of metal catalyst ions respectively chelating with the chelating groups on the surface of the catalyst support.

17. The catalyst according to claim 16, wherein the metal catalyst ions comprises at least one selected from the group consisting of ruthenium, cobalt, nickel, iron, manganese or copper, and/or the particle size of the catalyst support is between 1 $\mu$m and 10 mm.

18. The catalyst according to claim 1, 12 or 16, wherein the catalyst support is cation exchange resin or anion exchange resin.

19. The catalyst according to claim 12 or 16 used for catalyzing hydrogen releasing reaction of hydride and water.

20. The catalyst according to claim 19, wherein the hydride is selected from the group consisting of lithium aluminum hydride, sodium aluminum hydride, magnesium aluminum hydride, calcium aluminum hydride, lithium borohydride, sodium borohydride, potassium borohydride, beryllium borohydride, magnesium borohydride, calcium borohydride, lithium hydride, sodium hydride, magnesium hydride and calcium hydride.

100

120

110

catalyst support
(Support)

# FIG. 1(PRIOR ART)

200

$M^{n+}$ $M^{n+}$ $M^{n+}$

$M^{n+}$ $M^{n+}$

$M^{n+}$ $M^{n+}$

$M^{n+}$ catalyst support
(Support) $M^{n+}$

211

$M^{n+}$ $M^{n+}$

210

$M^{n+}$ $M^{n+}$

$M^{n+}$ $M^{n+}$

$M^{n+}$ $M^{n+}$

220

# FIG. 2

START

providing solution with metal catalyst ions — S31

providing catalyst supports — S32

placing catalyst supports in the solution
for forming catalysts — S33

collecting the catalysts — S34

END

# FIG. 3

FIG. 4

300

catalyst support
(Support)

320

310

# FIG. 5

START

providing solution with metal catalyst ions ⟩~ S61

providing catalyst supports ⟩~ S62

placing the catalyst supports in the solution ⟩~ S63

reducing the metal catalyst ions on the catalyst supports, for coating metal catalyst nano-structures and/or metal catalyst atoms on the surface of the catalyst supports ⟩~ S64

collecting the catalysts ⟩~ S65

END

# FIG. 6

300

catalyst support
(Support)

(chelation)

$M^{n+}$ $M^{n+}$ $M^{n+}$
$M^{n+}$ $M^{n+}$
$M^{n+}$ $M^{n+}$
$M^{n+}$ catalyst support
(Support) $M^{n+}$
$M^{n+}$ 211
$M^{n+}$ 210
$M^{n+}$ $M^{n+}$ $M^{n+}$
$M^{n+}$
220

(Reduction)

catalyst support
(Support)

320
310

FIG. 7

START

| extracting the catalyst supports whose surface chelate with metal catalyst ions | S81 |

| cleaning the catalyst supports for removing the un-chelated metal catalyst ions | S82 |

| providing a reducing agent | S83 |

| placing the catalyst support in the reducing agent for a reduction time | S84 |

END

FIG. 8

FIG. 9

| name of the sample | appearance | scanning electron microscope (SEM) |
|---|---|---|
| catalyst support Al$_2$O$_3$ (control group) | | |
| Catalyst Ru/Al$_2$O$_3$ (control group) | | |
| catalyst support IR-120 (embodiment of the present invention) | | |
| Catalyst Ru/IR-120 (embodiment of the present invention) | | |

Fig. 10

Europäisches
Patentamt
European
Patent Office
Office européen
des brevets

# EUROPEAN SEARCH REPORT

**Application Number**

EP 10 15 5997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HSUEH ET AL: "Simple and fast fabrication of polymer template-Ru composite as a catalyst for hydrogen generation from alkaline NaBH4 solution" JOURNAL OF POWER SOURCES, ELSEVIER SA, CH LNKD- DOI:10.1016/J.HRTHM.2007.09.028, vol. 177, no. 2, 5 December 2007 (2007-12-05), pages 485-492, XP022450295 ISSN: 0378-7753 * abstract * * page 486, left-hand column, line 27 - right-hand column, line 8 * * page 487, left-hand column, line 5 - right-hand column, line 24 * * page 491, right-hand column, line 15 - page 492, left-hand column, line 9 * * figures 4,5 * ----- | 1-20 | INV. B01J23/46 B01J31/08 B01J35/02 B01J37/08 B01J37/16 C01B3/02 B01J35/04 C01B3/06 |
| X | GB 1 236 616 A (MOBIL OIL CORP [US]) 23 June 1971 (1971-06-23) * page 1, lines 37-41,66-75 * * page 2, lines 61-79,117-129 * * page 3, lines 3-7,15-33,48-52,61-62,83-88 * * example 1 * ----- | 1-20 | TECHNICAL FIELDS SEARCHED (IPC) B01J C01B |
| X | WO 2005/005311 A2 (LYNNTECH INC [US]) 20 January 2005 (2005-01-20) * abstract * * paragraphs [0070], [0074] * * claims 1,10-12,17,35 * * example 5 * ----- | 1-20 | |

The present search report has been drawn up for all claims

| Place of search | Date of completion of the search | Examiner |
|---|---|---|
| Munich | 29 July 2010 | Fischbach, Malaika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 15 5997

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2010

| Patent document cited in search report | | Publication date | Patent family member(s) | | Publication date |
|---|---|---|---|---|---|
| GB 1236616 | A | 23-06-1971 | BE | 721687 A | 01-04-1969 |
| | | | CH | 507740 A | 31-05-1971 |
| | | | DE | 1800380 A1 | 08-05-1969 |
| | | | FR | 1583594 A | 14-11-1969 |
| | | | JP | 48010441 B | 03-04-1973 |
| | | | NL | 6814000 A | 08-04-1969 |
| WO 2005005311 | A2 | 20-01-2005 | US | 2009324452 A1 | 31-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 98108329